Europäisches Patentamt

European Patent Office

Office européen des brevets

(19)

(11) **EP 1 246 096 A1**

## (12) EUROPEAN PATENT APPLICATION

(43) Date of publication:
**02.10.2002 Bulletin 2002/40**

(51) Int Cl.⁷: $G06F\ 17/60$, $A01K\ 5/02$

(21) Application number: **01204761.9**

(22) Date of filing: **10.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **08.12.2000 NL 1016835**

(71) Applicant: **N.V. Nederlandsche Apparatenfabriek NEDAP**
**7141 DC Groenlo (NL)**

(72) Inventors:
• **Harmsen, Jan Hendrik**
  **7255 BJ Hengelo (NL)**
• **Odinga, Kornelis**
  **7206 BG Zutphen (NL)**

(74) Representative: **Prins, Adrianus Willem et al**
**Vereenigde,**
**Nieuwe Parklaan 97**
**2587 BN Den Haag (NL)**

### (54) Farm management system

(57) The farm management system is provided with at least one computer system, at least one milking plant and at least one first automatic feeder. The milking plant and the first automatic feeder are each connected with the computer system and are controlled by the computer system. The milking plant and the first automatic feeder are arranged together in a milking space. In the computer system, per animal, information is stored about a predicted milking period in which an animal can be milked at least substantially completely, a prescribed feed allowance per 24 hours and a predicted eating rate of the animal. The computer system calculates, in use, per animal, on the basis of the milking period and the eating rate, the maximum amount of feed which the animal can eat during milking during the milking period. Further, on the basis of the calculated maximum amount of feed during the milking period and the prescribed feed allowance per 24 hours, the computer system controls the first automatic feeder for providing a portion of feed to the respective animal in the milking space.

EP 1 246 096 A1

**Description**

This invention relates to a farm management system provided with at least one computer system, at least one milking plant and at least one first automatic feeder, the milking plant and the first automatic feeder each being connected with the computer system and being controlled by the computer system, the milking plant and the first automatic feeder being arranged together in a milking space. The object of the invention is to further optimize this system which is known per se.

Accordingly, the farm management system is characterized in that, in the computer system, per animal, information is stored about a predicted milking period in which an animal can be milked at least substantially completely during a milking pass, and a predicted eating rate of the animal, wherein the computer system is arranged, in use, per animal, on the basis of the predicted milking period of the milking pass and the predicted eating rate, to calculate the maximum amount of feed which the respective animal can eat during milking during the predicted milking period of the milking pass and, on the basis of the calculated maximum amount of feed during the predicted milking period of the milking pass, to control the first automatic feeder for providing a portion of feed to the respective animal in the milking space. Accordingly, what is achieved according to the invention is that an animal present in the milking space to be milked is at the same time offered the maximum possible feed allowance.

In particular, it holds here that the computer system controls the first automatic feeder for the respective animal, such that the maximum portion of feed provided in the milking space to the respective animal is equal to the calculated maximum amount of feed which the animal can eat during the milking pass for the respective animal, if this amount is less than a prescribed maximum feed allowance per meal of the respective animal. In this way, for this case, all the time the animal is present in the milking space is utilized not only for milking but also for feeding the animal.

In particular, it holds, further, that the computer system controls the first automatic feeder for the respective animal, such that the maximum portion of feed provided in the milking space to the respective animal is equal to a prescribed maximum feed allowance per meal for the respective animal, if the calculated maximum amount of feed which the animal can eat during the milking pass for the respective animal is greater than or equal to the prescribed maximum feed allowance per meal for the respective animal.

In this way, also for this case, what is achieved is that the time the animal spends in a milking space to be milked is optimally utilized to provide the animal with its prescribed feed allowance per 24 hours. In both instances, therefore, what is achieved is that during the period in which the animal is in the milking space to be milked, a maximum amount of feed is furnished to the animal, which maximum amount is equal to the eating rate x the milking period or the prescribed maximum feed allowance per meal, all this depending on the situation as set out hereinbefore.

In general, however, it will hold that the amount of feed that is administered to an animal during milking is equal to the eating rate of the animal x the predicted milking period.

In particular, it further holds that the farm management system is further provided with at least one second automatic feeder which is arranged outside the milking space, the computer system controlling the second automatic feeder for the respective animal for furnishing a supplementary portion of feed to the respective animal if the respective animal in the milking space, via the first automatic feeder, has eaten a portion of feed which is less than a prescribed feed allowance per 24 hours divided by a desired (planned) number of milking passes per 24 hours of the respective animal or if the portion of feed, determined by the computer, which is furnished to the animal during the milking pass is less than the prescribed feed allowance per 24 hours divided by the desired number of milking passes per 24 hours of the respective animal. The supplemental portion of feed of the animal can consist, for instance, of roughage, while the feed that is provided in the milking space consists of concentrated feed.

According to a preferred embodiment, it further holds that in the computer system, per animal, a predicted milk production per milking pass and a predicted milking rate is stored, while the computer system is arranged, in use, per animal, on the basis of the predicted milk production and the predicted milking rate, to calculate the predicted milking period in which the respective animal can be milked, for further processing. Typically, information is available about the predicted milk production per 24 hours and the predicted milking period.

Preferably, it holds that the computer system is provided, per animal, with information about a predicted milk production per 24 hours, while the computer system, at least on the basis of a desired (planned) number of milking passes per 24 hours and the predicted milk production per 24 hours calculates the predicted milk production of the milking pass. If the planned number of milking passes is 3 per 24 hours, it can be planned that the animal be milked every 8 hours and that per milking pass one-third of the predicted milk production per 24 hours be produced. However, it is more refined to also include in the calculation the time at which the animal presents. For instance, a linear relationship may be assumed between the lapse of time between a planned last milking pass or the actual time of the last milking pass and the time at which the animal reports to be milked or a predicted time at which the animal reports and the predicted milk production of the coming milking pass. In particular, therefore, the predicted milking period can be calculated partly on the basis of the time at which the animal reports to be milked. In that case, the calculation of the calculated maximum amount of feed that can be eaten during the predicted milking period will also change.

Preferably, it holds, further, that the farm management system is further provided with means known per se, for determining, per animal, a predicted milk production per 24 hours and determining a predicted milking rate. In this way, always, automatically, the updated value of the milk production and milking rate and hence in fact the milking period of the respective animal can be used for further processing as indicated.

According to a further elaboration of the invention, it holds, further, that the computer system is further arranged to store or calculate (plan), in a known manner, a desired time at which the respective animal is to be milked and should go voluntarily to the milking space, the farm management system being further provided with at least one third automatic feeder which is arranged outside the milking space and which is connected with the computer system, while the computer system, in use, arranges that a particular animal is not administered any food anymore from the third automatic feeder during a predetermined period preceding said desired time at which the respective animal should go to the milking space. What can be stimulated in this way is that the animal be lured to the milking station at predetermined times. The fact is that when the animal has not had any feed anymore for a particular period of time, it will get hungry and after some time understand that it will be fed when it goes to the milking space. What can be accomplished in this way is that the animal is milked regularly. This is beneficial to the milk yield. The production goes up and the quality of the milk is thus improved. As, moreover, for instance in the milking space, concentrate is furnished, the concentrate will displace the roughage. The animal can learn, for instance, that after milking and eating concentrate, it can leave the milking space in that the computer opens a gate in an automatic manner, whereafter the animal is given access to a space in which, with the aid of a second automatic feeder, roughage is furnished. It is also possible to give the animal access to the pasture instead of the space in which the second automatic feeder is arranged.

In particular, it holds that the second automatic feeder is identical to the third automatic feeder. In other words, with the aid of the second automatic feeder, the animal is additionally fed after milking, and the additional feeding of the animal with the aid of the second automatic feeder is stopped during a predetermined period preceding the above-mentioned desired time at which the animal should go to the milking space to feed and to be milked.

In particular, further, it holds that the farm management system is further provided with an identification system which is connected with the computer system for identifying the animals which proceed into the milking space, while an identification code of an animal going into the milking space as determined by the identification system is supplied to the computer system for further processing.

The invention will presently be further elucidated with reference to the drawing. In the drawing:

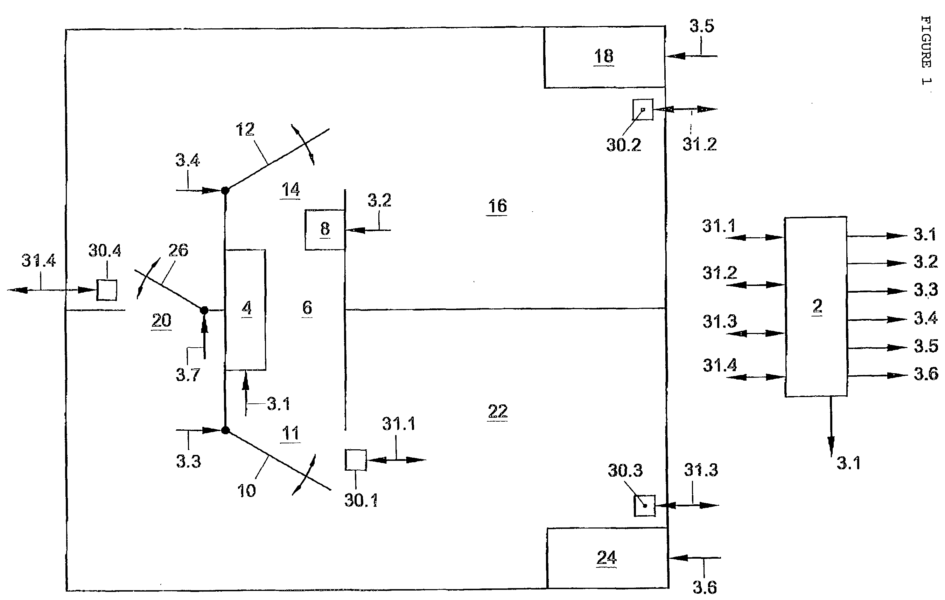

Fig. 1 shows a possible embodiment of a farm management system according to the invention.

The farm management system 1 is schematically indicated in Fig. 1 in a condition installed on a farm. The farm management system is provided with a computer system which comprises a computer 2. Further, the farm management system is provided with a milking plant, in this example designed as a milking robot 4, which is connected with the computer 2 via a line 3.1. The milking robot 4 in this example is arranged in a milking space 6. In this milking space 6, further, a first automatic feeder 8 is arranged which is connected with the computer 2 via line 3.2. The farm management system is further provided with a first controllable passage 10 which is connected with the computer 2 via line 3.3. The controllable passage 10 can open and close an entrance 11 for an animal to the milking space 6. Further, the farm management system is provided with a second controllable passage 12 which is connected with the computer via the line 3.4 for opening and closing an exit 14 of the milking space 6. When a cow leaves the milking space 6 via the exit 14 of the milking space 6, she enters a space 16 in which in this example a second automatic feeder 18 is arranged. The second automatic feeder 18 is connected with the computer 2 via line 3.5. The first space 16 communicates via a gate 20 with a second space 22, in which the entrance 11 to the milking space 6 is present. In the second space 22, further, a third automatic feeder 24 is arranged, which is connected with the computer 2 via a line 3.6. The farm management system is further provided with a third controllable passage 26, which is arranged for controllably opening and releasing the gate 20. The controllable passage 26 is connected with the computer via a line 3.7. The farm management system is further provided with an identification system which is connected with the computer system for identifying the animals which enter the milking space, whereby an identification code of an animal going into the milking space as determined by the identification system is supplied to the computer system for further processing. This identification system comprises a first reader 30.1 which is arranged adjacent the milking space 6. The reader 30.1 is connected with the computer 2 via a line 31.1. The reader 30.1 is arranged to read out a transponder or responder of an animal, in which an identification code is stored, for obtaining the identification code. This identification code is supplied to the computer 2 for further processing. Similarly, a reader 30.2 is arranged adjacent the second automatic feeder 18 and a third reader 30.3 is arranged adjacent the third automatic feeder 24. Thus, it holds that the identification system is further arranged for determining an identification code of an animal that is present adjacent the second automatic feeder and it holds that the identification system is further arranged for determining an identification code of an animal present at the third automatic feeder.

The operation of the system is as follows. The animals in the care of the farm management system are each provided with an ID label with a responder in which a unique identification code of the respective animal is stored. Further, in the computer 2, per animal, information is stored about a predicted milk production, a predicted milking rate and a prescribed feed allowance per 24 hours of the animal. The milk production can be predicted in a manner known per se. This milk production can be expressed, for instance, in a milk production per hour, a milk production per 24 hours or a milk production per milking of the respective animal. It is known that milking plants, including milking robots, are provided with means to measure the milk production per milking pass of an animal. To that end, the milking plant can be provided with a milk meter. Also, use can be made of a separate milk meter, which, however, is then regarded here as part of the milking plant. The value of the milk production can then be supplied to the computer system 2. On the basis of the measured amount of milk produced in at least one milking pass, the computer system 2 can then predict, in a manner known per se, a milk production for a next milking pass or next milking passes. Thus, the milk production for a next milking pass can, for instance, be set to be equal to the milk production of a last milking pass or to an average milk production of a number of milking passes.

Also, on the basis of a number of milking passes, the milk production per 24 hours can be predicted. On the basis of the predicted milk production per 24 hours and the time lapse between a last and a coming milking pass, the milk production for the coming milking pass can then be predicted. If this lapse of time increases, the expected milk production for the next milking pass will increase. If the milk production per 24 hours, for instance, equals M, and the lapse of time between the last milking pass (of which the time has been registered by the computer) and the time of the coming milking pass (the time of which is determined by the computer on the basis of the moment at which the animal is identified by the reader 30.1) equals $\Delta T$, then the expected milk production P for the next pass equals M. $\Delta T/$ 24. It is also possible to plan N milking passes per 24 hours (desired number of milking passes). The milking passes should then take place at

$t_0$, $t_1 = t_0 + \frac{24}{N}$, $t_2 = t_0 + 2 \cdot \frac{24}{N}$, $t_3 = t_0 + 3 \cdot \frac{24}{N} etc$ .

If the animal were to be milked exactly at these times, the predicted milk production per milking pass is M/N. However, if the animal reports for the fourth milking pass at time $t_3$' instead of the planned time $t_3$, the milk production P for the fourth milking pass can be predicted as follows:

$$P = \frac{t_3' - t_2}{24} . M$$

In this set-up, the <u>planning</u> of the milking passes remains unchanged and it is attempted to make the animal stick to this planning as well as possible. In another variant, P can be maintained at P=M/3 if the animal reports at time $t_3$'. As stated, the following can also apply:

$$P = \frac{t_3' - t_2'}{24} . M = \frac{\Delta T}{24} . M$$

wherein $t_2$' is the actual last time at which the animal was milked. In the foregoing example, linear relations between points in time on the one hand and milk production on the other have been assumed. However, other, nonlinear relations are also a possibility. In this example, it will be assumed that the following applies:

$$P = \frac{t_3' - t_2}{24} . M$$

It is also known that, for instance with the aid of the milking robot, the milk flow rate for the respective animal can be determined. Again, this can also be done by a milking plant provided with a milk meter or a separate milk meter which is then regarded again as belonging to the milking plant. A known milking plant provided with a known milk meter then forms a milking plant which is suitable to measure the milk production and/or milking rate. The value of the milk flow rate can then be used for determining a predicted milking rate of at least one next milking pass. In particular, at least one measured milking rate is set to be equal to the predicted milking rate for at least one next milking pass, respectively. Also, in the computer system, for each of the animals, the prescribed feed allowance per 24 hours is stored. Feed allowance per 24 hours is here understood to encompass equivalents such as the feed allowance per week, per month, per half-day, etc. Accordingly, when in the present patent application, feed allowance or milk production per 24 hours is mentioned, this is understood to cover other feed allowances or milk productions per unit time, such as feed allowances or milk productions per week, which, after all, by dividing by a factor of 7, can be simply converted to the feed allowance or milk production per 24 hours. The feed allowance is determined in a manner known per se. This can be established, for instance, by a farmer, based on his experience, and be inputted at the computer system. It is also possible that this prescribed feed allowance is determined automatically in a manner known per se, on the basis of, for instance, the milk production of the respective animal, the age of the animal, etc. Also stored in the computer system is information about a predicted eating rate of the animal. By this is meant the amount of feed (in weight or volume) which the animal can consume, for instance per unit time (such as a minute). It therefore concerns the amount of feed which the animal can consume per unit time during feeding. This parameter too can be determined per animal in a manner known per se, to be subsequently stored in the computer.

When an animal goes to the entrance of the milking space 6, the animal is identified with the aid of the reader 30.1. This identification code is passed on to the computer system 2. The computer system 2 checks in an automatic manner whether the animal is meanwhile entitled to a meal. If so, the computer system 2 controls the controllable passage 10, such that the entrance 11 of the milking space is cleared. It may also be that the computer always clears the entrance 11 when the animal presents. The thus identified animal then proceeds to the milking space 6. The computer further calculates on the basis of the predicted milk production P of the coming milking pass and the predicted milking rate S of the animal a predicted milking period TM for the coming milking pass. For instance the following may apply: TM=P/S. However, other, nonlinear relations are also conceivable. The predicted milking period is therefore a period of time needed to milk the animal completely during a single milking pass, such that it attains the predicted milk production for the coming milking pass. Next, the computer calculates on the basis of the predicted milking period and the predetermined eating rate, the maximum amount of feed which the animal can eat during milking during the milking period.

Next, the computer 2 controls via line 3.2 the first automatic feeder 8 for providing feed to the animal in the milking space, based on the calculated portion of feed. Further, the computer 2 controls the milking robot 4, such that it starts milking the animal. While being milked, the animal can at the same time eat the portion of feed furnished by the first automatic feeder 8. In general, this portion of feed will be equal to the predicted milking period x the eating rate of the animal. In this example, the milking period x the eating rate of the animal is set to be equal to the maximum amount of feed which the animal, while being milked, can eat during the milking period. On the basis of the calculated maximum amount of feed which the animal can eat during the milking period and a maximum prescribed feed allowance per meal, the computer controls the first automatic feeder to furnish a portion of feed to the respective animal in the milking space. In general, the portion of feed that has been furnished will be equal to the calculated maximum amount of feed which the animal can eat during milking. This means that precisely a portion of feed is furnished that can be eaten by the respective animal during milking. What is thereby achieved is that the whole period in which the animal is milked is utilized to allow the animal to feed. What is also achieved is that not more feed is provided than can be eaten by the animal during milking. Indeed, when milking is finished, the animal will generally have to leave the milking space again to make room for another animal. If the animal were not to have eaten the furnished feed by then, it must be removed or be given to another animal, which complicates metering a desired amount of feed to the other animal.

In particular situations in which on the one hand the eating rate of the animal is particular high and/or, on the other, the milking rate of the animal is low, it may be that during the milking period not the calculated maximum amount of feed that the animal can eat during the milking pass is supplied. This will be the case when this calculated maximum amount is greater than a maximum prescribed feed allowance at a time. In that case, after all, the animal will be overfed. Instead, for instance a portion of feed is furnished which is equal to the maximum prescribed feed allowance at a time. By maximum feed allowance at a time is meant the maximum portion of feed an animal is allowed to consume at one time (per meal). In particular, the computer system is provided with information about the maximum portion of feed per meal per identified animal.

In general, however, as mentioned, the calculated portion will be smaller than the maximum prescribed portion at a time, and a portion of feed will be furnished which is equal to the calculated maximum amount of feed that can be eaten during the milking period. When the animal has been milked, the computer 2 stops the milking robot 4 and proceeds to control the second controllable gate 12, such that the exit 14 is cleared. The animal can now proceed to the space 16. When the animal proceeds to go to the second automatic feeder 18, the animal will be identified with the aid of the reader 30.2. The identification code determined will again be passed to the computer 2. Computer 2 can presently control the second automatic feeder 18 to additionally feed the animal. This will generally be the case because during milking in the milking space 6, not the prescribed feed allowance of that moment is furnished to the animal. To that end, the computer system is provided, per animal, with information about a prescribed amount of feed per 24 hours. If during the successive milking passes it is not thus accomplished that the prescribed amount of feed per 24 hours is attained, then, with the aid of the second automatic feeder, additional feeding may take place between one or more milking passes, in order that, on average, for the respective animal, the prescribed amount of feed per 24 hours is attained. If, for instance, the animal is to eat 12 kg per 24 hours, the animal would have to eat 12/N kg per milking pass. It is assumed that the first milking pass has taken place at time t0. If the animal was subsequently, for instance during a fourth milking pass starting at time $t_3'$, given a portion of feed equal to TM*eating rate of the animal, (= the calculated maximum amount of feed the animal can eat during the milking pass), additional feeding will take place between the fourth (last) and fifth (coming) milking pass: 12/N-TM*eating rate of the animal.

Instead of T.M * eating rate of the animal, it may be that the animal has obtained less, viz. the maximum prescribed portion per meal. What can be additionally fed in that case, for instance, is: 12/N - the maximum prescribed portion per meal. As discussed above, TM for, for instance, the fourth milking pass can be determined on the basis of $t_3-t_2$, $t_3'-t_2$, $t_3'-t_2'$ or even $t_3-t_2'$. Suppose that the last milking pass has taken place at time $t_2$. The third milking pass is therefore the last milking pass. If the coming milking pass (the fourth milking pass) has been planned to commence at time $t_3$ additional feeding in the first ($t_3-t_2$) and the fourth ($t_3-t_2'$) case can therefore be calculated for additional feeding between the coming and the subsequent milking pass (the fifth milking pass) or between the last milking pass (the third milking pass) and the coming milking pass. For the second ($t_3'-t_2$) and third ($t_3'-t_2'$) case, additional feeding can take place between the coming and the subsequent milking pass. In fact, the calculation relevant to that end can be performed as soon as the start ($t_3'$) of the coming milking pass is known.

If, by contrast, additional feeding is based on the portion <u>actually</u> eaten by the animal during a milking pass, additional feeding can only be calculated on the basis of the last milking pass for the purpose of additional feeding between the last milking pass and the coming milking pass. Thus it is possible that the automatic feeder provides feed in subportions of feed of, for instance, 100 grams and that the automatic feeder stops providing subportions of feed when the animal stops eating. In that case, the animal can, for instance, have eaten less than planned/predicted. If this portion is equal to X, additional feeding can amount to 12/N - X. Additional feeding can then occur only between the last and the coming milking pass on the basis of the amount of feed eaten during the last milking pass.

When the animal has thus obtained a supplemental portion of feed, it can proceed to report at the gate 20. Again, with the aid of the reader 30.4, the identification code of the animal is determined and transmitted to the computer 2. The computer 2 can then, for instance, control the third controllable passage 26 to open the passage. The animal can then proceed to the space 22. In the space 22 a third automatic feeder 24 is arranged. When the animal reports at the third automatic feeder 24, it is again identified with the aid of the third reader 30.3. The computer 2 can then determine again whether the respective animal has already obtained sufficient feed. If desired, the animal can also be additionally fed with the aid of the third automatic feeder 24.

In particular, the first and the third automatic feeder provide concentrated feed. All the above-mentioned feed portions, with the exception of the feed portions at the second automatic feeder, then relate to concentrated feed. With the second automatic feeder, then only roughage is furnished. Additional feeding can, if desired, be divided over the second and third automatic feeder.

In particular, it further holds that the computer is further arranged to calculate, in a known manner, a desired time ($t_1,t_2,t_3$, ....) at which an animal should come to the milking space to eat and to be milked. When the animal should come to eat and be milked, it should proceed voluntarily to the milking space 6 and therefore report at the entrance 11. To accomplish and stimulate this, the computer 2 can control the third automatic feeder 24, such that it does not furnish any feed anymore to the respective animal during a predetermined period preceding the above-mentioned desired time at which the animal should proceed to the milking space. If the fourth milking pass was planned at $t_3$, it may be arranged, for instance, that from time $t_3$- 2 hours until $t_3$ no feed is dispensed to the respective animal anymore via the third automatic feeder. With the passage of time, the animal then starts to develop an appetite for concentrated feed and will automatically report at the entrance 11.

If the animal reports later than prescribed in the computer 2, the computer, on the basis of the expected milk production per 24 hours, will adjust the expect milk production for the coming milking pass upwards (for instance on the basis of a linear relation as discussed hereinbefore). On the basis of the expected milking rate, the expected milking period will likewise be adjusted upwards. Also, on the basis of the expected milking period and the expected eating rate of the animal, the maximum amount of feed that can be eaten during milking will be calculated. This amount is then furnished, provided that it is smaller than the prescribed maximum amount of feed per meal. If not, the maximum amount of feed per meal is furnished. On the basis of the amount of concentrated feed which has thus been administered by the first automatic feeder, optionally, concentrated feed is additionally fed by the third automatic feeder, so as to attain, on average, the prescribed amount of feed per 24 hours.

The calculation of the desired time at which an animal is to be milked in the milking space can be performed as follows. It is entered in the computer that the desired number of milking passes per 24 hours equals N. The lapse of time between two milking passes should then be 24 hours/N. If a first milking pass takes place at time $t_0$, all other desired times $t_n$ will be related thereto ($t_n = t_0 + n.24/p_n$ for the $(n+1)^{th}$ milking pass).

Example:

| Milking | |
|---|---|
| Predicted milk production per 24 hours | 30 liters |
| Desired number of milking passes per 24 hours as inputted (planning) | 3 |
| Predicted milking rate | 2 liters/minute |

The computer system calculates that the predicted milking period of a milking pass equals:

$$\frac{30\,liters}{3\,milking\,passes}\,x\,\frac{1}{2} = 5\,minutes$$

| Feeding | |
|---|---|
| Prescribed feed allowance 24 hours | 12 kg |
| Prescribed maximum allowance per meal | 3 kg |
| Predicted eating rate | 0.35 kg/minute |

The computer system calculates that the maximum amount to be eaten (portion) of feed during a milking pass equals 5x0.35 = 1.75 kg.

The computer system calculates that on average between two milking passes, including one milking pass, 12 kg/3=4 kg is to be eaten.

The computer calculates that 4-1.75 = 2.25 kg is to be additionally fed. The computer controls the second automatic feeder for additionally feeding 1 kg of roughage and the computer controls the third automatic feeder for additionally feeding 1.25 kg concentrated feed for the respective animal. The computer knows that a first milking pass has taken place at time $t_0$. The computer calculates that a next (second) milking pass will have to take place at $t_0$+24/3=$t_0$+ 8 hours.

The computer arranges that the animal, for a period of 2 hours preceding the time $t_0$+8, is no longer administered any concentrated feed anymore via the third automatic feeder, so that the animal gets hungry and reports timely at the milking robot to eat and to be milked.

If the animal reports at this time $t_0$+8 for the coming milking pass, additional feeding between the coming (second) milking pass and the third milking pass is carried out as discussed above. Naturally, the time $t_0$ +8 may vary slightly here, for instance ± 15 minutes, without this having consequences for the implementation of the above-mentioned planning. If the respective animal reports one hour late, however, the computer will calculate that it expects that milk production of the coming milking pass will be: $30x\frac{9}{24}$ = 11.25 $liter$. The computer then calculates that the expected milking period of the second milking pass will be 11.25/2=5.625 minutes. The computer then calculates that the expected maximum amount that can be eaten during milking in the second milking pass is: 5.625x0.35 = 1.96875 kg. Because this amount is smaller than the prescribed maximum feed allowance per meal, in the second milking pass the first automatic feeder will furnish 1.96875 kg of concentrated feed. The computer then calculates that 4 - 1.96875kg is to be additionally fed between the second and third milking pass. Such additional feeding occurs in this example after the last (late) milking pass and the coming milking pass. Again, this involves 1 kg roughage with the aid of the second feeding station and 4 - 1.96075 - 1 = 1.63125 kg of concentrated feed via the third feeding station.

The computer calculates the desired next third milking pass. It will be: $t_0$ + 2x8 hours. Despite the late second milking pass, the planning for the third milking pass therefore remains unchanged. Again, it holds that the third automatic feeder is blocked for a predetermined period preceding the planned milking pass. This period has in this example been chosen to equal 2 hours. It is also possible, however, to make this period dependent on the length of the period between the last milking pass and the planned coming milking pass. Naturally, it is also possible to start from a planned 4 milkings per 24 hours, etc.

The present example involves a second and third automatic feeder 18, 24. It is also possible, of course, that the second and third automatic feeder are formed by a single automatic feeder, for instance the automatic feeder 24. The controllable passage 26 could then be optionally omitted. Also, it is possible that the animals, when leaving the milking space, are not additionally fed with the aid of an automatic feeder, but instead are given access to the pasture. In this example, the computer comprises information about the predicted milk quantity per milking pass and the predicted milking rate for calculating the milking period. Naturally, the computer can also comprise exclusively information about the predicted milking period. Also, the milking robot can be replaced with another milking plant known per se.

The milking plant, or milking robot, and the first automatic feeder can be designed as one unit.

In particular, the farm management system is further provided with means, known per se, to predict the milk production, milking rate, milking period and/or eating rate or to upgrade same on the basis of new measuring results, etc. In this example, the feed of the animal furnished with the aid of the first automatic feeder 8 during milking is spread over time in portions of, for instance, 100 grams. If milking is finished faster than expected and milking is stopped, the provision of the portions of feed mentioned stops too. The animal then leaves the milking space 6 and has eaten less than planned. Preferably, the computer then calculates what (greater) amount is to be additionally fed in order that the animal still eats, for instance, 4 kg on average between two milking passes. The second and third automatic feeder are controlled accordingly by the computer for additional feeding. If during the second milking pass the animal eats, for instance, 1.5 kg instead of 1.75 kg, then 4-1.5=2,5 kg is to be additionally fed between the second and third milking pass. The computer then controls, for instance, the second automatic feeder to additionally feed 1.25 kg of roughage and the computer controls the third automatic feeder for additionally feeding 1.25 kg of concentrated feed. The planning of the time at which the third milking pass will take place remains unchanged. If the computer at any time calculates an expected normal amount of feed (for instance 3.25 kg) which can be consumed during a milking pass and which is greater than the prescribed maximum feed allowance per meal ( 3kg), the animal, during this coming milking pass, is given the prescribed maximum feed allowance per meal. The difference of 0.25 kg is also additionally fed. In this example, the cow should eat 4 kg between two milking passes including one milking pass. In that case 4-3=1 kg will have to be additionally fed. The computer calculates that after the coming milking 0.5 kg is additionally fed through the second automatic feeder and 0.5 kg is additionally fed through the third automatic feeder. Also, this portion can be additionally fed prior to the coming milking pass, based on the calculations made for the coming milking pass.

Additional feeding prior to a coming milking pass can take place starting from the planned time of the coming milking pass. However, if the starting point is the actual time of the last milking pass, and, based thereon, the calculated maximum portion of feed that will be furnished during the milking pass, or if the starting point is the size of the portion of feed which has actually been eaten during the last milking pass, then additional feedings takes place <u>after</u> the last milking pass based on the last milking pass. If it has been mentioned above that particular information is stored in the computer, this can also mean that this information has been calculated by the computer and has been stored in a volatile manner (in a RAM memory). Such variants are understood to fall within the scope of the invention

## Claims

1. A farm management system provided with at least one computer system, at least one milking plant and at least one first automatic feeder, the milking plant and the first automatic feeder each being connected with the computer system and being controlled by the computer system, the milking plant and the first automatic feeder being arranged together in a milking space, **characterized in that**, in the computer system, per animal, information is stored about a predicted milking period in which an animal can be milked at least substantially completely during a milking pass, and a predicted eating rate of the animal, wherein the computer system is arranged, in use, per animal, on the basis of the predicted milking period of the milking pass and the predicted eating rate, to calculate the maximum amount of feed which the respective animal can eat during milking during the predicted milking period of the milking pass and, on the basis of the calculated maximum amount of feed during the predicted milking period of the milking pass, to control the first automatic feeder for providing a portion of feed to the respective animal in the milking space.

2. A farm management system according to claim 1, **characterized in that** in the computer system, per animal, a predicted milk production of the milking pass and a predicted milking rate are stored, the computer system being arranged to calculate, in use, per animal, the predicted milking period on the basis of the predicted milk production of the milking pass and the predicted milking rate.

3. A farm management system according to claim 2, **characterized in that** the computer system is provided, per animal, with information about a predicted milk production per 24 hours, while the computer system, at least on the basis of a desired (planned) number of milking passes per 24 hours and the predicted milk production per 24 hours, calculates the predicted milk production of the milking pass.

4. A farm management system according to any one of the preceding claims, **characterized in that** the farm management system is further provided with means, known per se, for determining, per animal, a predicted milk production per 24 hours and/or determining a predicted milking rate.

5. A farm management system according to any one of the preceding claims, **characterized in that** the computer system predicts the milking rate of a coming milking pass on the basis of a measured milking rate of at least one preceding milking pass.

6. A farm management system according to any one of the preceding claims, **characterized in that** the computer system controls the first automatic feeder for the respective animal, such that the maximum portion of feed provided in the milking space to the respective animal is equal to the calculated maximum amount of feed which the animal can eat during the milking pass for the respective animal, if this amount is less than a prescribed maximum feed allowance per meal of the respective animal.

7. A farm management system according to any one of the preceding claims, **characterized in that** the computer system controls the first automatic feeder for the respective animal, such that the maximum portion of feed provided in the milking space to the respective animal is equal to a prescribed maximum feed allowance per meal for the respective animal, if the calculated maximum amount of feed which the animal can eat during the milking pass for the respective animal is greater than or equal to the prescribed maximum feed allowance per meal for the respective animal.

8. A farm management system according to any one of the preceding claims 6 or 7, **characterized in that** the farm management system is further provided with at least one second automatic feeder which is arranged outside the milking space, the computer system controlling the second automatic feeder for the respective animal for furnishing an additional portion of feed to the respective animal if the respective animal in the milking space, via the first automatic feeder, has eaten a portion of feed which is less than a prescribed feed allowance per 24 hours divided by a desired (planned) number of milking passes per 24 hours of the respective animal or if the portion of feed, determined by the computer, which is furnished to the animal during the milking pass is less than the prescribed feed allowance per 24 hours divided by the desired number of milking passes per 24 hours of the respective animal.

9. A farm management system according to any one of the preceding claims, **characterized in that** the computer system is further arranged to store or calculate (plan) a desired time at which the respective animal is to be fed and to be milked by the milking plant and should voluntarily go to the milking space, the farm management system being further provided with at least one third automatic feeder which is arranged outside the milking space and which is connected with the computer system, the computer system arranging that the respective animal is not furnished with any feed from the third automatic feeder anymore for a predetermined period preceding said desired time at which the respective animal should go to the milking space.

10. A farm management system according to claims 8 and 9, **characterized in that** the at least one second automatic feeder is identical to the at least one third automatic feeder.

11. A farm management system according to claim 1, **characterized in that** in the computer system, per animal, information is stored about a predicted milking period in which an animal can be milked at least substantially completely during the coming milking pass, and a predicted eating rate of the animal, wherein the computer system is arranged, in use, per animal, on the basis of the predicted milking period of the coming milking pass and the predicted eating rate, to calculate the maximum amount of feed which the respective animal can eat during milking during the predicted milking period of the coming milking pass and, on the basis of the calculated maximum amount of feed during the predicted milking period of the coming milking pass, to control the first automatic feeder for providing a portion of feed to the respective animal in the milking space during the coming milking pass.

12. A farm management system according to claim 11, **characterized in that** in the computer system, per animal, a predicted milk production of the coming milking pass and a predicted milking rate are stored, the computer system being arranged to calculate, in use, per animal, the predicted milking period of the coming milking pass on the basis of the predicted milk production of the coming milking pass and the predicted milking rate.

13. A farm management system according to claim 12, **characterized in that** the computer system is provided, per animal, with information about a predicted milk production per 24 hours, the computer system calculating the predicted milk production of the coming milking pass on the basis of the time at which an animal reports for the coming milking pass or the time at which the coming milking pass has been planned on the one hand, the predicted milk production per 24 hours and the actual time of the last milking pass or a predicted (planned) time of the last milking pass on the other, and the predicted milk production per 24 hours.

14. A farm management system according to claim 13, **characterized in that** the predicted times of the successive milking passes are stored fixedly in the computer or are generated by the computer.

**15.** A farm management system according to claim 14, **characterized in that** the predicted times have been inputted at the computer on the basis of a selected time of a first milking pass and a desired number of milking passes per 24 hours.

**16.** A farm management system according to any one of the preceding claims 11-15, **characterized in that** the farm management system is further provided with means known per se, for determining, per animal, a predicted milk production per 24 hours and/or determining a predicted milking rate.

**17.** A farm management system according to any one of the preceding claims 11-16, **characterized in that** the computer system, on the basis of a measured milking rate of at least one preceding milking pass, predicts the milking rate of the coming milking pass.

**18.** A farm management system according to any one of the preceding claims 11-17, **characterized in that** the computer system controls the first automatic feeder for the respective animal, such that the maximum portion of feed provided in the milking space to the respective animal is equal to the calculated maximum amount of feed which the animal can eat during the milking pass for the respective animal, if this amount is less than a prescribed maximum feed allowance per meal of the respective animal.

**19.** A farm management system according to any one of the preceding claims 11-18, **characterized in that** the computer system controls the first automatic feeder for the respective animal, such that the maximum portion of feed provided in the milking space to the respective animal is equal to the prescribed maximum feed allowance per meal for the respective animal, if the calculated maximum amount of feed which the animal can eat during the milking pass for the respective animal is greater than or equal to a prescribed feed allowance per meal for the respective animal.

**20.** A farm management system according to any one of the preceding claims 11-19, **characterized in that** the farm management system is further provided with at least one second automatic feeder which is arranged outside the milking space, wherein the computer system controls the second automatic feeder for the respective animal for furnishing a supplementary portion of feed to the respective animal between the last and the coming milking pass if the respective animal during the last milking pass, via the first automatic feeder, has eaten a portion of feed which is less than the prescribed feed allowance per 24 hours divided by a desired (planned) number of milking passes per 24 hours of the respective animal or wherein the computer system controls the second automatic feeder for the respective animal for additionally feeding the respective animal between the coming milking pass and the subsequent milking pass if the portion of feed for the coming milking pass, determined by the computer system, which is furnished to the animal is less than the prescribed feed allowance per 24 hours divided by a desired (planned) number of milking passes per 24 hours.

**21.** A farm management system according to claim 20, **characterized in that** the first automatic feeder feeds the animal by successively presenting, spread over time, subportions of feed each of a predetermined amount, while the first automatic feeder is arranged to stop presenting subportions when the animal stops eating.

**22.** A farm management system according to any one of the preceding claims 11-21, **characterized in that** the computer system is further arranged to store or calculate (plan) a desired time at which the coming milking pass should take place and the respective animal should, to that end, voluntarily go to the milking space, the farm management system being further provided with at least one third automatic feeder which is arranged outside the milking space and which is connected with the computer system, the computer system arranging, in use, that the respective animal is not furnished with any feed from the third automatic feeder anymore for a predetermined period preceding said desired time at which the respective animal should go to the milking space.

**23.** A farm management system according to claims 21 and 22, **characterized in that** the computer system controls the second and third automatic feeder, such that the supplementary portion of feed is furnished, divided over the second and third automatic feeder.

**24.** A farm management system according to claims 20 and 22, **characterized in that** the at least second automatic feeder is identical to the at least third automatic feeder.

**25.** A farm management system according to any one of the preceding claims 11-24, **characterized in that** the farm management system is further provided with an identification system which is connected with the computer system for identifying the animals going into the milking space, while an identification code, determined by the identification system, of the respective animal going into the milking space is supplied to the computer system for further processing.

26. A farm management system according to claim 8, 10, 20, 21, 23 or 24 and according to claim 25, **characterized in that** the identification system is further arranged for determining an identity code of the respective animal which is present at the second automatic feeder.

27. A farm management system according to claim 9 or 22 and according to claim 25, **characterized in that** the identification system is further arranged for determining an identity code of the respective animal which is present at the third automatic feeder.

28. A farm management system according to any one of the preceding claims, **characterized in that** the farm management system is further provided with at least one controllable passage which is connected with the computer system for opening and closing an entrance of the milking space and/or for opening and closing an exit for an animal from the milking space.

FIGURE 1

European Patent Office

**EUROPEAN SEARCH REPORT**

Application Number

EP 01 20 4761

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 96 00003 A (MAASLAND NV ;LELY OLAF V D (CH); BERG KAREL VAN DEN (NL)) 4 January 1996 (1996-01-04) * abstract * * page 1, line 9 - page 4, line 26 * | 1-28 | G06F17/60 A01K5/02 |
| X | US 5 778 820 A (VAN DER LELY CORNELIS ET AL) 14 July 1998 (1998-07-14) * abstract * * claims 1-7 * | 1-28 | |
| A | US 5 988 106 A (VAN DEN BERG KAREL) 23 November 1999 (1999-11-23) * abstract * * claims 1-8 * | 1-28 | |
| A | US 5 782 199 A (OOSTERLING PIETER ADRIAAN) 21 July 1998 (1998-07-21) * abstract * * column 1, line 36 - column 2, line 11 * | 1-28 | |
| A | US 4 498 424 A (LEUSCHNER PETER) 12 February 1985 (1985-02-12) * abstract * * column 1, line 30 - column 1, line 57 * | 1 | TECHNICAL FIELDS SEARCHED (Int.Cl.7) G06F A01K |
| A | US 5 673 647 A (PRATT WILLIAM C) 7 October 1997 (1997-10-07) * abstract * * column 1, line 20 - column 2, line 15 * * column 5, line 20 - column 6, line 36 * | 1 | |
| A | NL 9 400 527 A (NEDAP NV) 1 November 1995 (1995-11-01) * abstract * * claim 1 * | 1 | |

-/--

The present search report has been drawn up for all claims

| Place of search | Date of completion of the search | Examiner |
|---|---|---|
| THE HAGUE | 8 August 2002 | Daman, M |

## EUROPEAN SEARCH REPORT

**European Patent Office**

**Application Number**

EP 01 20 4761

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 517 923 A (PALMER TOM) 21 May 1985 (1985-05-21) * abstract * * column 3, line 1 - column 6, line 7 * | 1 | |
| A | US 5 351 644 A (EVERETT ROBERT W) 4 October 1994 (1994-10-04) * abstract * * claim 1 * | 1 | |
| A | EP 1 008 294 A (MAASLAND NV) 14 June 2000 (2000-06-14) * abstract * | 1 | |
| A | US 4 712 511 A (ZAMZOW DONALD D ET AL) 15 December 1987 (1987-12-15) * abstract * * column 2, line 5 - column 3, line 48 * | 1 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 8 August 2002 | Daman, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**

EP 01 20 4761

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2002

| Patent document cited in search report | | Publication date | Patent family member(s) | | Publication date |
|---|---|---|---|---|---|
| WO 9600003 | A | 04-01-1996 | NL | 9401033 A | 01-02-1996 |
| | | | DE | 69526033 D1 | 02-05-2002 |
| | | | EP | 1163841 A2 | 19-12-2001 |
| | | | EP | 0714233 A1 | 05-06-1996 |
| | | | JP | 9502361 T | 11-03-1997 |
| | | | WO | 9600003 A1 | 04-01-1996 |
| | | | NZ | 287565 A | 26-01-1998 |
| | | | NZ | 329214 A | 28-01-1999 |
| US 5778820 | A | 14-07-1998 | NL | 9401801 A | 01-04-1996 |
| | | | EP | 1224856 A2 | 24-07-2002 |
| | | | EP | 1224857 A2 | 24-07-2002 |
| | | | EP | 0724382 A1 | 07-08-1996 |
| | | | JP | 9504440 T | 06-05-1997 |
| | | | WO | 9605723 A1 | 29-02-1996 |
| US 5988106 | A | 23-11-1999 | NL | 1002471 C2 | 29-08-1997 |
| | | | AU | 710561 B2 | 23-09-1999 |
| | | | AU | 1736797 A | 16-09-1997 |
| | | | DE | 29724041 U1 | 02-09-1999 |
| | | | DE | 69700249 D1 | 08-07-1999 |
| | | | DE | 69700249 T2 | 09-12-1999 |
| | | | DK | 824309 T3 | 15-11-1999 |
| | | | EP | 0824309 A1 | 25-02-1998 |
| | | | JP | 11504525 T | 27-04-1999 |
| | | | WO | 9731526 A1 | 04-09-1997 |
| US 5782199 | A | 21-07-1998 | NL | 9401238 A | 01-03-1996 |
| | | | CA | 2196089 A1 | 08-02-1996 |
| | | | DE | 69505133 D1 | 05-11-1998 |
| | | | DE | 69505133 T2 | 18-02-1999 |
| | | | DE | 69520053 D1 | 08-03-2001 |
| | | | DE | 69520053 T2 | 02-08-2001 |
| | | | EP | 0772389 A1 | 14-05-1997 |
| | | | EP | 0853875 A2 | 22-07-1998 |
| | | | JP | 10503088 T | 24-03-1998 |
| | | | WO | 9603031 A1 | 08-02-1996 |
| | | | US | 6062164 A | 16-05-2000 |
| US 4498424 | A | 12-02-1985 | DE | 3218438 A1 | 17-11-1983 |
| | | | DE | 3382003 D1 | 03-01-1991 |
| | | | DK | 215383 A | 16-11-1983 |
| | | | EP | 0094618 A2 | 23-11-1983 |
| US 5673647 | A | 07-10-1997 | AU | 690741 B2 | 30-04-1998 |
| | | | AU | 3457095 A | 09-05-1996 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 01 20 4761

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2002

| Patent document cited in search report | | Publication date | Patent family member(s) | | Publication date |
|---|---|---|---|---|---|
| US 5673647 | A | | AU 7868898 A | | 01-10-1998 |
| | | | CA 2161749 A1 | | 01-05-1996 |
| | | | US 6135055 A | | 24-10-2000 |
| | | | US 6318289 B1 | | 20-11-2001 |
| | | | US 6000361 A | | 14-12-1999 |
| | | | US 2002050248 A1 | | 02-05-2002 |
| NL 9400527 | A | 01-11-1995 | NONE | | |
| US 4517923 | A | 21-05-1985 | NONE | | |
| US 5351644 | A | 04-10-1994 | AT 217104 T | | 15-05-2002 |
| | | | CA 2130471 A1 | | 15-09-1994 |
| | | | DE 69430504 D1 | | 06-06-2002 |
| | | | DK 637200 T3 | | 17-06-2002 |
| | | | EP 0637200 A1 | | 08-02-1995 |
| | | | WO 9419934 A2 | | 15-09-1994 |
| EP 1008294 | A | 14-06-2000 | NL 1010764 C2 | | 13-06-2000 |
| | | | AU 5954199 A | | 15-06-2000 |
| | | | EP 1008294 A1 | | 14-06-2000 |
| | | | JP 2000166413 A | | 20-06-2000 |
| | | | US 6263832 B1 | | 24-07-2001 |
| US 4712511 | A | 15-12-1987 | NONE | | |

EPO FORM P0459

For more details about this annex : see Official Journal of the European Patent Office, No. 12/82